# FASCICULE DE BREVET EUROPEEN

(11) **EP 4 002 352 B1**
(45) Date de publication et mention de la délivrance du brevet: **04.01.2023**
(21) Numéro de dépôt: 21209658.0
(22) Date de dépôt: 22.11.2021
(51) Int. Cl.: G10K 11/168, F02C 7/045, G10K 11/172

(54) **COQUE DE PEAU RÉSISTIVE INTÉGRANT DES BANDES MÉTALLIQUES PERFORÉES, ET PAROI INTERNE ACOUSTIQUE D'UNE ENTRÉE D'AIR D'AÉRONEF FORMÉE À PARTIR DE TELLES COQUES DE PEAU RÉSISTIVE**
SCHALE AUS RESISTIVEM BELAG MIT PERFORIERTEN METALLISCHEN SCHICHTEN, UND INTERNE AKUSTISCHE WAND EINES LUFTEINGANGS EINES LUFTFAHRZEUGS BASIEREND AUF SOLCHEN SCHALEN
SHELL MADE OF RESISTIVE COVERING COMPRISING PERFORATED METALLIC LAYERS, AND INTERNAL ACOUSTIC WALL OF AN AIR ENTRY OF AN AIRCRAFT BASED ON SUCH SHELLS

(30) Priorité: 24.11.2020 FR 2012070
(43) Date de publication de la demande: 25.05.2022
(73) Titulaire: AIRBUS OPERATIONS (S.A.S.), 31060 Toulouse (FR)
(72) Inventeur: LALANE, Jacques, 31060 Toulouse (FR); PORTE, Alain, 31060 Toulouse (FR); PONS, François, 31060 Toulouse (FR)
(74) Mandataire: Sarraméa, Claude

(56) Documents cités:
- DE-A1-102013 010 091
- FR-A1- 2 838 860
- US-A- 4 104 002
- US-A1- 2005 081 992
- US-A1- 2019 039 746

## Description

La présente demande concerne une coque de peau résistive pour la réalisation d'une paroi acoustique. Elle concerne plus particulièrement les coques (ou secteurs) de peau résistive et la paroi acoustique qui délimitent le conduit central de l'entrée d'air d'une nacelle d'aéronef.

Il est rappelé qu'une nacelle d'aéronef comprend, de l'avant vers l'arrière, un premier tronçon en amont du flux aérodynamique, appelé entrée d'air, un deuxième tronçon qui recouvre le carter de la soufflante moteur, appelé capot de soufflante, et un troisième tronçon qui présente généralement une zone d'inversion de poussée qui entoure le corps de turbine du moteur à l'aval du flux aérodynamique.

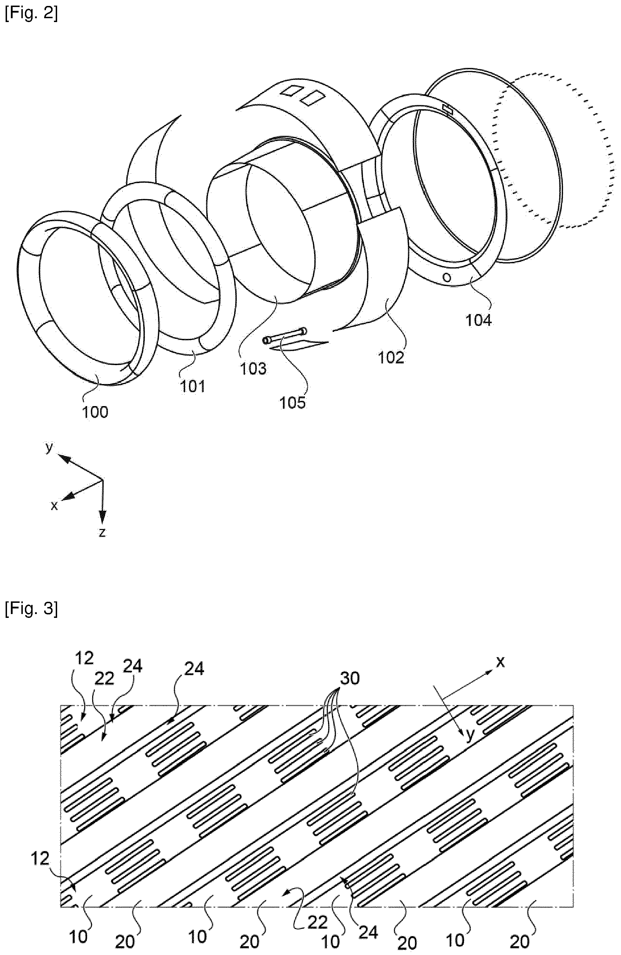

Une entrée d'air, telle celle illustrée à la figure 2 annexée, comprend usuellement des éléments de structure tels qu'un cadre avant 101 et un cadre arrière 104, ainsi que, de l'avant vers l'arrière de la nacelle, une lèvre 100 portée par le cadre avant, des panneaux externes 102 prolongeant la lèvre à l'extérieur de la nacelle (et formant une paroi externe de l'entrée d'air), une paroi interne 103 prolongeant la lèvre à l'intérieur de la nacelle et délimitant un conduit central permettant de canaliser l'air en direction du moteur, les panneaux externes et la paroi interne étant portés par le cadre avant 101 et le cadre arrière 104.

La forme de l'entrée d'air et les systèmes dont elle est équipée doivent permettre d'éviter la formation et/ou l'accumulation de glace ou givre, d'assurer une fonction aérodynamique, de prévenir la pénétration d'oiseaux dans le compartiment de soufflante contenant les systèmes moteurs, ainsi que de limiter l'impact des nuisances sonores. Pour remplir ce dernier objectif, la paroi interne 103 est une paroi acoustique qui comprend :
- une peau résistive perforée ou micro-perforée qui forme la face visible de la paroi (face orientée vers l'intérieur du conduit central de l'entrée d'air) ; l'objectif de cette peau résistive est de laisser passer les ondes sonores et éventuellement aussi de dissiper au moins partiellement l'énergie de celles-ci sous forme thermique,
- une peau arrière ayant essentiellement pour fonction d'assurer la tenue structurale de la paroi,
- une âme amortissante alvéolaire, généralement en nid d'abeilles, de part et d'autre de laquelle sont fixées la peau résistive et la peau arrière, laquelle âme participe à la fois à la tenue mécanique et à l'amortissement acoustique, la fonction principale de l'âme étant d'emprisonner et amortir les ondes sonores.

De façon connue, la peau résistive de la paroi interne de l'entrée d'air peut être composée de plusieurs (par exemple quatre à dix) secteurs de peau résistive correspondant à des secteurs angulaires du conduit central de l'entrée d'air, comme illustré sur la figure 2. Il en va de même de la peau arrière de la paroi interne. Chaque secteur de peau résistive est fixé aux cadres avant 101 et arrière 104. Les différents secteurs sont de plus fixés entre eux à l'aide d'éclisses.

Chaque secteur de peau résistive est une coque rigide en un matériau composite à base de fibres (de carbone ou de verre par exemple) et de résine polymérisable. Cette coque composite peut être obtenue par moulage à l'aide d'un moule en trois dimensions, par injection de fibres et résine, ou par sur-injection de résine ou de fibres et résine sur des nappes ou tissus. La forme du secteur est alors directement donnée par le moule, au moment de la polymérisation de la résine. En variante, le secteur de peau résistive peut être moulé à plat, en deux dimensions, puis être soumis à une opération de formage qui lui donne sa forme complexe. Comme précédemment expliqué, la peau résistive d'une paroi acoustique, en particulier une paroi interne d'entrée d'air, doit laisser passer les ondes acoustiques. Des orifices, généralement de forme circulaires, sont donc percés dans les coques rigides en matériau composite pour former des secteurs de peau résistive.

Un exemple de panneau acoustique comprenant une coque de peau résistive multicouche est décrit dans FR 2 838 860.

Les spécifications acoustiques d'une coque de peau résistive dépendent, entre autres, du taux de surface ouverte (TSO) de la peau, c'est-à-dire de la surface d'orifices par unité de surface de peau.

Les spécifications (acoustiques, mécaniques, thermiques, etc.) des peaux résistives antérieures connues sont, pour certaines, satisfaisantes. Cependant, il est toujours souhaitable d'améliorer les performances acoustiques des peaux résistives connues et de garantir que ces performances acoustiques ne se dégradent pas dans le temps, tout au long de la vie de la nacelle.

Le document US4104002 décrit une structure absorbante pour une paroi interne d'une nacelle d'aéronef, comprenant des bandes métalliques s'étendant de façon hélicoïdale autour de l'axe longitudinal de la structure, et, entre les bandes métalliques, des bandes de matériau absorbant, s'étendant également de façon hélicoïdale autour de l'axe longitudinal de la structure.

Le document DE102013010091 décrit un élément acoustique comportant une pluralité de canaux insonorisants qui traversent l'élément acoustique à partir d'une ouverture de canal disposée sur un côté plat visible de l'élément acoustique vers un côté plat opposé de l'élément acoustique.

Le document US2019039746 décrit un panneau d'atténuation du bruit comprenant une couche en nid d'abeille insonorisante disposée entre une couche de surface perforée sur un côté faisant face à un flux d'air du panneau et une couche de support composite sur un second côté opposé dudit panneau.

Le document US2005/081992 décrit un procédé de fabrication d'un panneau à couche d'amortissement acoustique protégée, comprenant une âme alvéolaire flanquée d'une couche d'amortissement acoustique poreuse et d'un réflecteur acoustique total, ladite couche poreuse étant constituée de bandes parallèles.

L'invention vise à atteindre cet objectif en proposant une coque de peau résistive pour panneau acoustique ou paroi interne d'entrée d'air d'aéronef qui est plus résistante à l'arrachement et à l'usure et dont le taux de surface ouverte est garanti dans la durée.

Pour ce faire, l'invention propose une coque de peau résistive pour panneau acoustique ou paroi interne d'entrée d'air d'aéronef comprenant des bandes métalliques perforées qui s'étendent selon une direction longitudinale et sont espacées les unes des autres selon une direction transversale (direction orthogonale à la direction longitudinale), les bandes métalliques perforées présentant une face frontale, dite face externe, destinée à être en contact avec un flux aérodynamique, et une face frontale opposée dite face interne, les bandes métalliques perforées étant reliées entre elles par des bandes pleines composites en un matériau polymère renforcé de fibres, lesquelles bandes pleines composites présentent une face frontale externe affleurant au niveau des faces externes des bandes métalliques perforées, de sorte que la coque de peau résistive présente une face externe lisse, les bandes pleines composites ayant de plus une épaisseur supérieure à celle des bandes métalliques perforées, de sorte que les bandes pleines composites présentent une face interne surélevée par rapport à la face interne des bandes métalliques perforées.

Dans toute la demande, l'expression « *bande métallique perforée »* désigne une bande métallique pourvue de perforations ou micro-perforations pour le passage d'ondes acoustiques, c'est-à-dire de trous dont les dimensions peuvent être soit de l'ordre du millimètre (perforations), soit de l'ordre du micromètre ou à tout le moins de la dizaine ou centaine de micromètre (micro-perforations).

Selon l'invention, comme défini plus haut, les perforations ou micro-perforations de la coque de peau résistive se situent donc dans des bandes métalliques, et uniquement dans celles-ci, par opposition, dans les peaux antérieures connues comme celle divulguée par FR 2 838 860, aux orifices ménagés dans des couches de matériau composite. Les bandes métalliques utilisées selon l'invention s'érodent moins facilement que les couches composites des peaux résistives antérieures, et les risques que le TSO de ses bandes métalliques augmente par arrachement de matière dans la continuité des perforations est réduit.

La peau résistive selon l'invention offre par conséquent des performances acoustiques pérennes tout en ayant, grâce à la présence de bandes pleines composites renforcées entre les bandes métalliques perforées, une tenue mécanique adaptée à son utilisation pour la réalisation d'une paroi interne d'entrée d'air d'aéronef, fortement sollicitée au plan mécanique. L'épaisseur des bandes pleines composites peut en effet être choisie en fonction des spécificités mécaniques souhaitées pour la coque de peau résistive.

En outre, le fait de prévoir les perforations dans des bandes métalliques, dont l'épaisseur est moindre, permet, non seulement de garantir une faible érosion des perforations (en raison de la nature des bandes), mais aussi de prévoir des perforations de dimensions réduites (en raison de la faible épaisseur des bandes), c'est-à-dire des perforations ou micro-perforations qui ont moins d'impact sur la traînée, et ce, sans risque de voir ces perforations ou micro-perforations se boucher (ce risque étant restreint voire nul lorsque les trous ont un diamètre supérieur à l'épaisseur de la couche percée).

En résumé, l'invention propose donc une coque de peau résistive hybride, formée d'une alternance (selon la direction transversale) de bandes (longitudinales) métalliques perforées qui déterminent les propriétés acoustiques de la peau et garantissent la pérennité de ces propriétés, et de bandes (longitudinales) pleines composites qui participent essentiellement à la tenue mécanique de la peau.

Selon une caractéristique possible de l'invention, les bandes métalliques perforées présentent des bords longitudinaux chanfreinés et/ou irréguliers configurés pour faciliter et/ou renforcer l'accrochage, sur les bandes métalliques, du polymère composite renforcé de fibres constituant les bandes pleines composites.

Selon une caractéristique possible de l'invention, les bandes métalliques possèdent des perforations ou micro-perforations ayant une plus grande dimension selon la direction longitudinale et/ou une plus petite dimension selon la direction transversale. Cette caractéristique permet de limiter la traînée générée par les perforations ou micro-perforations. Toutefois, l'invention n'est pas limitée à cette configuration et l'inverse est aussi possible.

Selon une caractéristique possible de l'invention, les bandes métalliques présentent des perforations ou micro-perforations oblongues, par exemple rectangulaires ou elliptiques.

Ces perforations ou micro-perforations oblongues ont avantageusement une largeur comprise entre 0,15 mm et 2 mm et une longueur comprise entre 0,6 mm et 20 mm. S'il s'agit de micro-perforations, la largeur est préférentiellement comprise entre 0,15 mm et 0,5 mm, plus préférentiellement entre 0,3 mm et 0,4 mm ; et la longueur est préférentiellement comprise entre 2 mm et 12 mm, plus préférentiellement entre 3 mm et 5 mm. S'il s'agit de perforations, la largeur est préférentiellement comprise 1 mm et 2 mm, plus préférentiellement entre 1,5 mm et 2 mm ; et la longueur est préférentiellement comprise entre 10 mm et 20°mm.

Selon une caractéristique possible de l'invention, qu'il s'agisse de perforations ou micro-perforations (oblongues), le ratio entre la longueur et la largeur (longueur divisée par largeur) des perforations ou micro-perforations est avantageusement supérieur ou égal à 2, préférentiellement compris entre 2 (inclus) et 10 (inclus), plus préférentiellement supérieur ou égal à 4 ou compris entre 4 (inclus) et 10 (inclus). Un tel ratio permet de capturer une réduction de traînée significative.

Dans un mode de réalisation particulier avantageux, les micro-perforations oblongues mesurent 0,3 mm par 1,8 mm. Dans un autre mode de réalisation particulier, les micro-perforations sont circulaires avec un diamètre compris entre 0,25 mm et 0,35 mm, préférentiellement de l'ordre de 0,3 mm.

Dans les deux modes de réalisation particuliers ci-dessus, les micro-perforations peuvent être obtenues par perçage par faisceau d'électrons, et ce, à une cadence élevée de l'ordre de 50 trous pour secondes.

Selon une caractéristique possible de l'invention, les bandes métalliques perforées présentent une épaisseur comprise entre 0,10 mm et 0,4 mm, de préférence entre 0,2 mm et 0,3 mm.

Selon une caractéristique possible de l'invention, les bandes pleines composites présentent une épaisseur comprise entre 0,3 mm et 0,6 mm, de préférence entre 0,4 mm et 0,5 mm.

Selon une caractéristique possible de l'invention, les bandes pleines composites présentent une épaisseur supérieure d'au plus 0,2 mm à l'épaisseur des bandes métalliques perforées.

Selon une caractéristique possible, les bandes pleines composites ont localement des épaisseurs variables. En particulier, les bandes pleines composites présentent avantageusement une épaisseur variable selon la direction longitudinale (X), c'est-à-dire une épaisseur qui peut varier d'un plan transversal (un plan transversal de la coque correspondant à un plan orbital de l'entrée d'air) à un autre. Ainsi par exemple, il est avantageux de prévoir, pour l'ensemble ou au moins l'une des bandes pleines composites, une épaisseur de bande localement supérieure (comparée à l'épaisseur du reste de la bande) dans au moins un plan transversal (ou plan orbital). En d'autres termes, les bandes pleines composites présentent, dans un ou plusieurs plans transversaux, une surépaisseur qui, dans la paroi interne de l'entrée d'air, forme un ou plusieurs murets orbitaux aptes à freiner, voire éviter totalement, une éventuelle recirculation d'air le long de l'entrée d'air. Compte tenu des différences de pression existant selon la direction longitudinale X dans l'entrée d'air, l'air peut pénétrer dans la paroi interne de l'entrée d'air en un point de l'entrée d'air et ressortir de la paroi interne en un autre point de l'entrée d'air, plus en aval par exemple ; des phénomènes de recirculation d'air peuvent ainsi être générés par les différences de pression régnant le long de l'entrée d'air. Les murets orbitaux créés dans les bandes pleines composites permettent de freiner ou d'éviter ces phénomènes.

Selon une caractéristique possible, les bandes pleines composites sont en un matériau composite formé par moulage ou surmoulage, injection ou sur-injection de résine pure ou de résine additionnée de fibres. Le surmoulage, l'injection ou sur-injection permettent de réaliser de façon industrielle des coques dont les bandes pleines composites peuvent avoir localement une épaisseur supérieure dans certains plans transversaux. Ces méthodes offrent une capacité d'adaptation locale, et ce, sans pénaliser le moyen industriel global.

Selon une caractéristique possible de l'invention, les bandes métalliques perforées sont en un matériau choisi parmi les aciers inoxydables, le titane, etc., et les alliages des précédents matériaux.

Selon une caractéristique possible de l'invention, les bandes pleines composites sont en un matériau composite à base de fibres choisies parmi les fibres de carbone, de verre, de Kevlar, les fibres aramides, etc., noyées dans un polymère choisi parmi les résines thermoplastiques dont les résines de la famille des polyetherethercetones (PEEK) et les résines de la famille des polyetherimides (PEI).

L'invention s'étend à une paroi interne d'entrée d'air d'aéronef comprenant une peau résistive configurée pour laisser passer des ondes acoustiques, une âme alvéolaire configurée pour amortir lesdites ondes acoustiques et une peau arrière structurale, caractérisée en ce que la peau résistive de la paroi interne est composée de coques de peau résistive conforme à l'invention, la direction longitudinale des coques de peau résistive étant parallèle à l'axe central, ou direction axiale, de l'entrée d'air.

Selon une caractéristique possible, la paroi interne de l'entrée d'air comprend de plus, entre la peau résistive et l'âme alvéolaire, un bobinage composé soit d'une pluralité de bandes pleines composites s'étendant dans des plans transversaux tout autour du conduit central et espacées les unes des autres selon la direction axiale de l'entrée d'air, soit d'une unique bande pleine composite hélicoïdale enroulée autour dudit conduit.

L'invention s'étend à une nacelle d'aéronef comprenant une entrée d'air ayant une paroi interne selon l'invention. Elle s'étend aussi à un ensemble propulsif équipé d'une telle nacelle, et à un aéronef comprenant au moins un ensemble propulsif ainsi équipé.

L'invention, selon un exemple de réalisation, sera bien comprise et ses avantages apparaîtront mieux à la lecture de la description détaillée qui suit, donnée à titre indicatif et nullement limitatif, en référence aux dessins annexés dans lesquels :
La figure 1 est une vue en perspective d'un aéronef.
La figure 2 est une vue en perspective éclatée d'une entrée d'air de l'art antérieur, mais qui pourrait être réalisée avec des coques de peau résistive selon l'invention.
La figure 3 est une vue en perspective de la face frontale interne d'un premier mode de réalisation d'une coque de peau résistive selon l'invention.
La figure 4 est une vue en perspective de la face frontale externe de la coque de peau résistive de la figure 3.
La figure 5 est une vue en perspective et en coupe transversale de la coque de peau résistive des figures 3 et 4.
La figure 6 est une vue en perspective de la face frontale interne d'un deuxième mode de réalisation d'une coque de peau résistive selon l'invention.
La figure 7 est une vue en perspective de la face frontale interne d'un troisième mode de réalisation d'une coque de peau résistive selon l'invention.

Les éléments identiques représentés sur les figures précitées sont identifiés par des références numériques identiques.

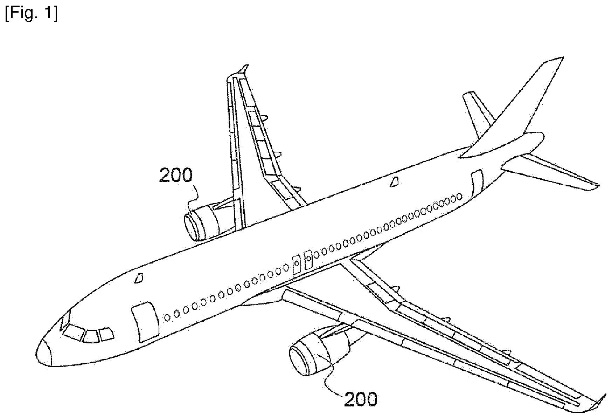

La figure 1 montre un aéronef biréacteur dont les deux nacelles 200 possèdent une entrée d'air susceptible d'être équipée d'une peau résistive réalisée à partir de coques de peau résistive selon l'invention.

Les figures 3 à 5 représentent un premier mode de réalisation d'une coque de peau résistive selon l'invention. Seule une partie de la coque est visible sur ces figures.

Cette coque de peau résistive comprend des bandes métalliques perforées 10, c'est-à-dire des bandes métalliques pourvues de perforations ou micro-perforations 30. Ces bandes métalliques perforées 10 s'étendent selon une direction longitudinale X de la coque et sont espacées les unes des autres selon une direction transversale Y.

Entre deux bandes métalliques perforées 10 successives s'étend une bande pleine composite 20 qui adhère aux deux bandes métalliques et les solidarise. Les bandes pleines composites 20 peuvent être en un matériau composite à base de fibres de carbone et de résine en PEI par exemple.

Les bandes composites sont de préférence obtenues par surmoulage des bandes métalliques dans un moule 3D ayant la forme de la coque de peau résistive à réaliser.

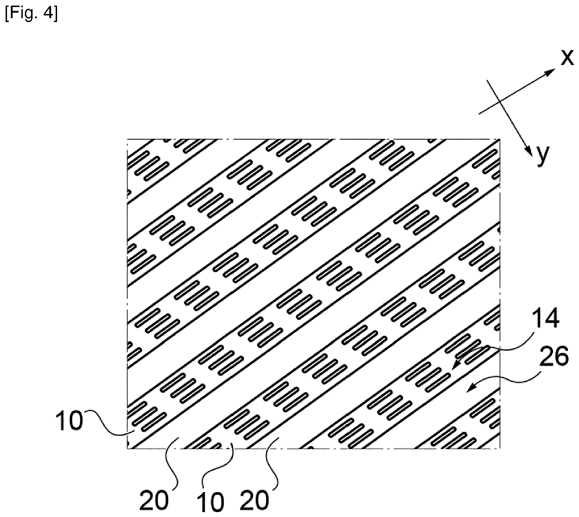

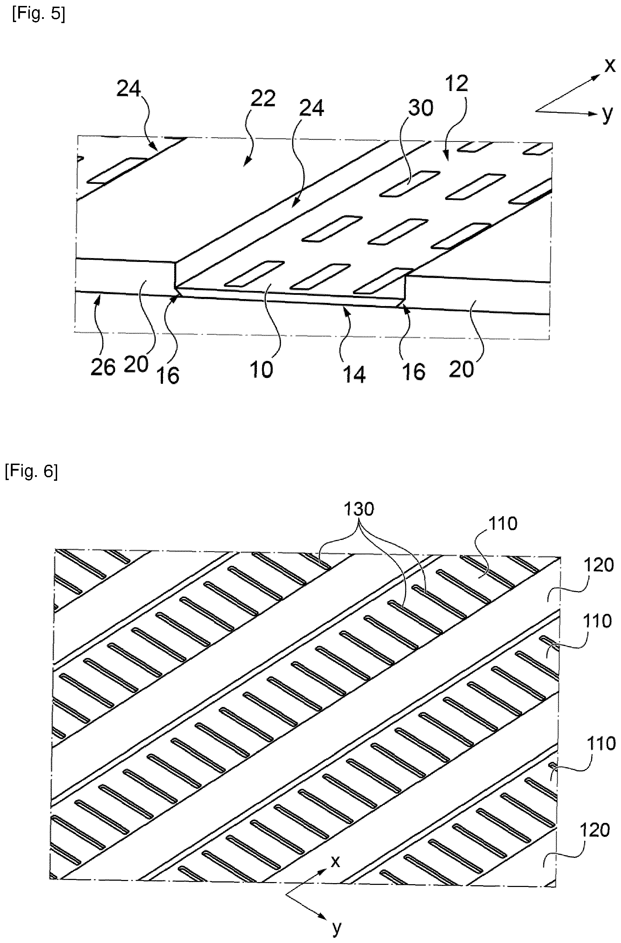

Les bandes métalliques présentent une première face frontale 14 (visible sur la figure 4), qualifiée de face externe car elle est destinée à former la face visible du conduit central d'une entrée d'air d'aéronef, c'est-à-dire la face externe de la paroi interne de l'entrée d'air. Les bandes métalliques présentent une face frontale opposée 12 (visible sur les figures 3 et 5), qualifiée de face interne 12 car destinée à être située à l'intérieur de la paroi interne de l'entrée d'air, contre une âme alvéolaire (âme en nid d'abeilles par exemple, non représentée). De même, les bandes pleines composites comprennent une face frontale externe 26 (visible sur la figure 4) et une face frontale interne 22 (visible sur les figures 3 et 5).

Les faces frontales externes 14 et 26, respectivement des bandes métalliques et des bandes pleines composites, s'étendent dans un même plan ou une même surface bombée, c'est-à-dire que la face externe 14 de chaque bande métallique perforée 10 affleure à la surface des faces frontales externes 26 des deux bandes pleines composites 10 qui sont adjacentes à ladite bande métallique perforée, et, de même, la face externe 26 de chaque bande pleine composite 20 affleure à la surface des faces frontales externes 14 des deux bandes métalliques perforées 10 qui sont adjacentes à ladite bande pleine composite. Les faces externes 14 et 26 des bandes métalliques perforées et des bandes pleines composite forment ainsi une face externe lisse pour la paroi interne de l'entrée d'air, comme on peut l'observer à la figure 4.

A l'inverse, les faces frontales internes 22 des bandes pleines composites s'étendent en débord par rapport aux faces frontales interne 12 des bandes métalliques perforées 22, de sorte que chaque bande pleine composite crée deux épaulements 24 dans la face frontale interne de la coque de peau résistive. En d'autres termes, la face interne de la coque de peau résistive présente une alternance de créneaux et de tranchées s'étendant longitudinalement, formés respectivement par les bandes pleines composites et les bandes métalliques perforées. De préférence, les épaulements 24 ne dépassent pas 0,2 mm de hauteur.

Par définition, chaque bande métallique perforée 10 comporte des perforations ou micro-perforations 30. Dans ce premier mode de réalisation, les perforations ou micro-perforations 30 sont oblongues voire rectangulaires, avec une plus grande dimension (longueur) qui s'étend selon la direction longitudinale X et une plus faible dimension (largeur) selon la direction transversale Y, étant précisé que la direction longitudinale X de la coque de peau est destinée à coïncider avec la direction axiale de l'entrée d'air à réaliser.

Les bandes métalliques perforées 10 présentent par exemple une épaisseur de 0,2 mm à 0,3 mm, et des perforations 30 dont la largeur est entre 0,3 mm et 0,4 mm et la longueur entre 3 mm et 4 mm. Les bandes pleines composites 20 ont par ailleurs une épaisseur correspondant à 2 plis ou plus si nécessaire, par exemple entre 0,4 mm et 0,5 mm, la différence d'épaisseur entre les bandes composites et les bandes métalliques étant limitée, de préférence, à 0,2 mm. De temps en temps, de façon régulière ou irrégulière, par exemple avec un intervalle de 25 à 100 mm selon la direction transversale X, des bandes pleines composites peuvent avoir une hauteur de l'ordre de 40 mm pour créer des murets orbitaux freinant ou évitant la recirculation d'air dans l'entrée d'air selon la direction longitudinale X.

Par ailleurs, dans ce premier mode de réalisation, chaque bande métallique perforée 10 présentent des bords longitudinaux chanfreinés du côté de la face externe 14 de ladite bande. Ces chanfreins 16 favorisent l'accroche des bandes pleines composites adjacentes 20 à la bande métallique perforée 10. Deux autres chanfreins, du côté de la face interne 12 de la bande métallique 10 pourraient aussi être prévus. En variante ou en combinaison, les tranches (bords longitudinaux) des bandes métalliques peuvent présenter des irrégularités, visant de même à renforcer l'accroche entre bandes composites et métalliques.

La figure 6 illustre un deuxième mode de réalisation. A l'instar du premier mode de réalisation, ce deuxième mode de réalisation comprend des bandes métalliques perforées 110 et des bandes pleines composites 120 qui s'étendent principalement selon la direction longitudinale X de la coque de peau. En revanche, ce deuxième mode de réalisation diffère du premier mode en ce que ses bandes métalliques 110 comprennent des perforations ou micro-perforations oblongues ou rectangulaires qui s'étendent principalement selon la direction transversale Y (au lieu de X).

Comme précédemment, les bandes pleines composites 120 sont obtenues par surmoulage des bandes métalliques 110 dans un moule 3D, l'épaisseur de matériau composite renforcé de fibres déposée entre deux bandes métalliques perforées 110 étant supérieure à l'épaisseur desdites bandes métalliques.

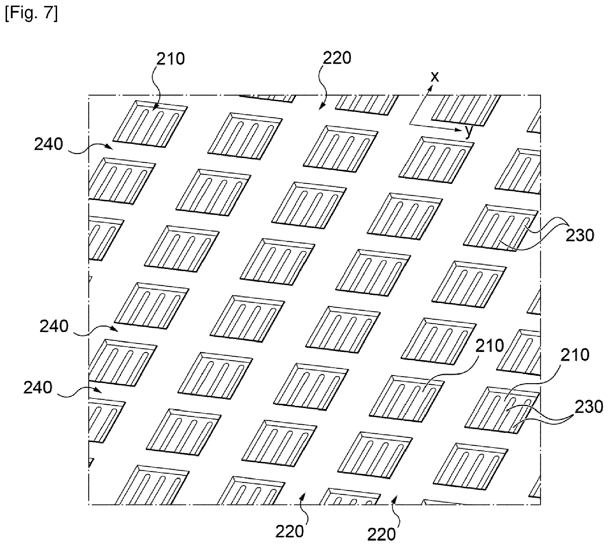

Dans le troisième mode de réalisation, illustré à la figure 7, le matériau composite est injecté non seulement entre des bandes métalliques 210 perforées s'étendant selon la direction longitudinale X de façon à obtenir des bandes pleines longitudinales 220, mais aussi en partie sur les bandes métalliques de façon à obtenir de plus des bandes pleines composites transversales 240 (qui s'étendent selon la direction transversale Y). Les bandes pleines composites 220 et 240 forment donc un quadrillage en surépaisseur des bandes métalliques 210 laissant apparaître des zones carrées (ou éventuellement rectangulaires) perforées.

Les perforations ou micro-perforations 230 des bandes métalliques perforées (longitudinales) qui sont situées en regard d'une bande pleine composite transversale 240 sont comblées par le matériau composite injecté ; en variante, il est possible de prévoir des bandes métalliques dépourvues de perforations au droit des bandes pleines composites transversales 240.

L'ensemble des bandes composites 220, 240, assure la liaison mécanique des bandes métalliques 210 entre elles. De plus, les bandes pleines composites longitudinales 220 sont destinées à reprendre essentiellement les efforts axiaux auxquels la paroi interne de l'entrée d'air est soumise, tandis que les bandes pleines composites transversales 240 reprennent efficacement les efforts orbitaux et radiaux.

L'invention s'étend à une paroi interne d'entrée d'air comprenant une pluralité de coques de peau résistive selon l'invention, chaque coque correspondant par exemple à un secteur du conduit de l'entrée d'air.

La paroi interne comprend de plus une âme alvéolaire, par exemple composée de panneaux en nid d'abeilles, qui sont collés à la face interne de chaque coque de peau, l'accostage de l'âme alvéolaire sur ladite face interne avec un film de réticulation compensant de préférence la surépaisseur générée par les bandes pleines composites par rapport aux bandes métalliques perforées (cet effet est obtenu si la surépaisseur n'excède pas 0,2 mm). La paroi interne comprend enfin une peau arrière structurelle, qui peut être composée d'un ou plusieurs plis en polymère renforcé de fibres.

Il est également possible de prévoir un bobinage entre les coques de peau résistive et l'âme alvéolaire. Ce bobinage peut prendre la forme d'une pluralité de bandes circulaires indépendantes ou d'une bande hélicoïdale s'enroulant autour des coques de peaux résistive. La hauteur de la surépaisseur des bandes pleines composites selon l'invention doit alors être calibrée en tenant compte de l'épaisseur du bobinage.

L'invention n'est pas limitée à ces exemples et s'étend à toutes les variantes entrant dans le cadre des revendications annexées.

## Revendications

1. Coque de peau résistive pour panneau acoustique ou paroi interne (103) d'entrée d'air d'aéronef, comprenant des bandes métalliques (10 ; 110 ; 210), les bandes métalliques présentant une face frontale (14), dite face externe, destinée à être en contact avec un flux aérodynamique, et une face frontale opposée (12) dite face interne, lesdites bandes métalliques (10, 110 ; 210) étant reliées entre elles par des bandes pleines (20, 120 ; 220), les bandes pleines (20, 120 ; 220) présentent une face frontale externe (26) affleurant au niveau des faces externes (14) des bandes métalliques, la coque de peau résistive présentant par conséquent une face externe lisse,
**caractérisée en ce que** lesdites bandes métalliques (10 ; 110 ; 210) sont perforées et s'étendent selon une direction longitudinale (X) et sont espacées les unes des autres selon une direction transversale (Y),
et **en ce que** les bandes pleines (20, 120 ; 220) sont en composites et s'étendent selon la direction longitudinale (X), lesquelles bandes pleines composites sont en un polymère renforcé de fibres, les bandes pleines composites (20, 120 ; 220) ayant de plus une épaisseur supérieure à celle des bandes métalliques perforées (10, 110 ; 210), les bandes pleines composites présentant par conséquent une face interne (22) surélevée par rapport à la face interne (12) des bandes métalliques perforées.

2. Coque de peau résistive selon la revendication 1, **caractérisée en ce que** les bandes métalliques perforées (10) présentent des bords longitudinaux chanfreinés (16) et/ou irréguliers configurés pour faciliter et/ou renforcer l'accrochage, sur les bandes métalliques (10), du polymère renforcé de fibres constituant les bandes pleines composites (20).

3. Coque de peau résistive selon l'une des revendications 1 ou 2, **caractérisée en ce que** les bandes métalliques perforées (10, 210) possèdent des perforations ou micro-perforations (30 ; 230) ayant une plus grande dimension selon la direction longitudinale (X) et/ou une plus petite dimension selon la direction transversale (Y).

4. Coque de peau résistive selon l'une des revendications 1 à 3, **caractérisée en ce que** les bandes métalliques (10, 110 ; 210) présentent des perforations ou micro-perforations oblongues (30, 130 ; 230).

5. Coque de peau résistive selon la revendication 4, **caractérisée en ce que** les micro-perforations ou perforations oblongues ont une largeur comprise entre 0,15 mm et 2 mm, et une longueur comprise entre 0,6 mm et 20 mm.

6. Coque de peau résistive selon l'une des revendications 4 ou 5, **caractérisée en ce que** le ratio entre la longueur et la largeur des perforations ou micro-perforations est compris entre 2 et 10.

7. Coque de peau résistive selon l'une des revendications 1 à 3, **caractérisée en ce que** les bandes métalliques (10, 110 ; 210) présentent des micro-perforations circulaires de diamètre compris entre 0,25 mm et 0,35 mm.

8. Coque de peau résistive selon l'une des revendications 1 à 7, **caractérisée en ce que** les bandes métalliques perforées (10, 110; 210) présentent une épaisseur comprise entre 0,1 mm et 0,4 mm, et **en ce que** les bandes pleines composites (20 ; 120 ; 220) présentent une épaisseur comprise entre 0,3 mm et 0,6 mm.

9. Coque de peau résistive selon l'une des revendications 1 à 8, **caractérisée** en ce les bandes métalliques perforées (10, 110 ; 210) sont en un matériau métallique choisi parmi les aciers inoxydables, le titane et les alliages des précédents matériaux.

10. Coque de peau résistive selon l'une des revendications 1 à 9, **caractérisée** en ce les bandes pleines composites (20, 120 ; 220) sont en un matériau composite à base de fibres choisies parmi les fibres de carbone, de verre, de Kevlar, les fibres aramides, noyées dans un polymère choisi parmi les résines thermoplastiques dont les résines de la famille des polyetherethercetones (PEEK) et les résines de la famille des polyetherimides (PEI).

11. Coque de peau résistive selon l'une des revendications 1 à 10, **caractérisée en ce que** les bandes pleines composites (20, 120, 220) présentent une épaisseur variable selon la direction longitudinale (X), avec une épaisseur localement supérieure dans au moins un plan transversal.

12. Paroi interne (103) d'entrée d'air d'aéronef comprenant une peau résistive configurée pour laisser passer des ondes acoustiques, une âme alvéolaire configurée pour amortir lesdites ondes acoustiques et une peau arrière structurale, **caractérisée en ce que** la peau résistive de la paroi interne est composée de coques de peau résistive selon l'une des revendications 1 à 11, la direction longitudinale des coques de peau résistive étant parallèle à un axe central de l'entrée d'air.

13. Paroi interne d'entrée d'air d'aéronef selon la revendication 12, **caractérisée en ce qu'**elle comprend de plus, entre la peau résistive et l'âme alvéolaire, un bobinage composé soit d'une pluralité de bandes pleines composites s'étendant dans des plans transversaux tout autour d'un conduit central formé par la peau résistive, et espacées les unes des autres selon la direction longitudinale, soit d'une unique bande pleine composite hélicoïdale enroulée autour dudit conduit.

14. Nacelle d'aéronef (200) comprenant une entrée d'air ayant une paroi interne selon l'une des revendications 12 ou 13.

15. Ensemble propulsif d'aéronef comprenant une nacelle (200) selon la revendication 14.

16. Aéronef comprenant au moins un ensemble propulsif selon la revendication 15.

## Patentansprüche

1. Schale mit resistiver Haut für eine akustische Wand oder Innenwand (103) eines Lufteinlasses eines Luftfahrzeugs, umfassend Metallstreifen (10; 110; 210), wobei die Metallstreifen eine Stirnseite (14), Außenseite genannt, die dazu bestimmt ist, mit einem aerodynamischen Strom in Kontakt zu sein, und eine entgegengesetzte Stirnseite (12), Innenseite genannt, aufweisen, wobei die Metallstreifen (10, 110; 210) untereinander durch durchgehende Streifen (20, 120; 220) verbunden sind, wobei die durchgehenden Streifen (20, 120; 220) eine äußere Stirnseite (26) aufweisen, die an den Außenseiten (14) der Metallstreifen bündig ist, wobei die Schale mit resistiver Haut infolgedessen eine glatte Außenseite aufweist,
**dadurch gekennzeichnet, dass** die Metallstreifen (10; 110; 210) perforiert sind und sich entlang einer Längsrichtung (X) erstrecken und voneinander entlang einer Querrichtung (Y) beabstandet sind,
und dass die durchgehenden Streifen (20, 120; 220) aus Verbundwerkstoffen sind und sich entlang der Längsrichtung (X) erstrecken, wobei die durchgehenden Verbundwerkstoffstreifen aus einem faserverstärkten Polymer sind, wobei die durchgehenden Verbundwerkstoffstreifen (20, 120; 220) ferner eine größere Dicke als die perforierten Metallstreifen (10, 110; 210) haben, wobei die durchgehenden Verbundwerkstoffstreifen infolgedessen eine in Bezug auf die Innenseite (12) der perforierten Metallstreifen erhöhte Innenseite (22) aufweisen.

2. Schale mit resistiver Haut nach Anspruch 1, **dadurch gekennzeichnet, dass** die perforierten Metallstreifen (10) angefaste und/oder unregelmäßige Längskanten (16) aufweisen, die dazu ausgestaltet sind, das Befestigen des faserverstärkten Polymers, aus dem die durchgehenden Verbundwerkstoffstreifen (20) bestehen, an den Metallstreifen (10) zu erleichtern und/oder zu verstärken.

3. Schale mit resistiver Haut nach einem der Ansprüche 1 oder 2, **dadurch gekennzeichnet, dass** die perforierten Metallstreifen (10, 210) Perforationen oder Mikroperforationen (30; 230) besitzen, die ein größeres Maß entlang der Längsrichtung (X) und/oder ein kleineres Maß entlang der Querrichtung (Y) haben.

4. Schale mit resistiver Haut nach einem der Ansprüche 1 bis 3, **dadurch gekennzeichnet, dass** die Metallstreifen (10, 110; 210) längliche Perforationen oder Mikroperforationen (30, 130; 230) aufweisen.

5. Schale mit resistiver Haut nach Anspruch 4, **dadurch gekennzeichnet, dass** die länglichen Mikroperforationen oder Perforationen eine Breite zwischen 0,15 mm und 2 mm und eine Länge zwischen 0,6 mm und 20 mm haben.

6. Schale mit resistiver Haut nach einem der Ansprüche 4 oder 5, **dadurch gekennzeichnet, dass** das Verhältnis zwischen der Länge und der Breite der Perforationen oder Mikroperforationen zwischen 2 und 10 beträgt.

7. Schale mit resistiver Haut nach einem der Ansprüche 1 bis 3, **dadurch gekennzeichnet, dass** die Metallstreifen (10, 110; 210) kreisförmige Mikroperforationen mit einem Durchmesser zwischen 0,25 mm und 0,35 mm aufweisen.

8. Schale mit resistiver Haut nach einem der Ansprüche 1 bis 7, **dadurch gekennzeichnet, dass** die perforierten Metallstreifen (10, 110; 210) eine Dicke zwischen 0,1 mm und 0,4 mm aufweisen und dass die durchgehenden Verbundwerkstoffstreifen (20; 120; 220) eine Dicke zwischen 0,3 mm und 0,6 mm aufweisen.

9. Schale mit resistiver Haut nach einem der Ansprüche 1 bis 8, **dadurch gekennzeichnet, dass** die perforierten Metallstreifen (10, 110; 210) aus einem metallischen Werkstoff sind, der unter nichtrostenden Stählen, Titan und Legierungen der vorgenannten Werkstoffe gewählt ist.

10. Schale mit resistiver Haut nach einem der Ansprüche 1 bis 9, **dadurch gekennzeichnet, dass** die durchgehenden Verbundwerkstoffstreifen (20, 120; 220) aus einem Verbundwerkstoff auf Basis von Fasern sind, die unter Kohlenstoff-, Glas-, Kevlarfasern, Aramidfasern gewählt sind, die in ein Polymer eingebettet sind, das unter den thermoplastischen Harzen, darunter die Harze der Familie der Polyetheretherketone (PEEK) und die Harze der Familie der Polyetherimide (PEI), gewählt ist.

11. Schale mit resistiver Haut nach einem der Ansprüche 1 bis 10, **dadurch gekennzeichnet, dass** die durchgehenden Verbundwerkstoffstreifen (20, 120, 220) eine entlang der Längsrichtung (X) variable Dicke aufweisen, mit einer in mindestens einer Querebene lokal größeren Dicke.

12. Innenwand (103) eines Lufteinlasses eines Luftfahrzeugs, umfassend eine resistive Haut, die dazu ausgestaltet ist, Schallwellen durchzulassen, einen Wabenkern, der dazu ausgestaltet ist, die Schallwellen zu dämpfen, und eine strukturelle rückwärtige Haut, **dadurch gekennzeichnet, dass** die resistive Haut der Innenwand aus Schalen mit resistiver Haut nach einem der Ansprüche 1 bis 11 zusammengesetzt ist, wobei die Längsrichtung der Schalen mit resistiver Haut parallel zu einer zentralen Achse des Lufteinlasses verläuft.

13. Innenwand eines Lufteinlasses eines Luftfahrzeugs nach Anspruch 12, **dadurch gekennzeichnet, dass** sie ferner, zwischen der resistiven Haut und dem Wabenkern, eine Wicklung umfasst, die entweder aus einer Mehrzahl von durchgehenden Verbundwerkstoffstreifen besteht, die sich in einer der Querebenen vollständig um einen durch die resistive Haut gebildeten zentralen Kanal herum erstrecken, oder aus einem einzigen gewendelten durchgehenden Verbundwerkstoffstreifen, der um den Kanal herum gewickelt ist.

14. Luftfahrzeuggondel (200) mit einem Lufteinlass, der eine Innenwand nach einem der Ansprüche 12 oder 13 hat.

15. Luftfahrzeugtriebwerksanordnung mit einer Gondel (200) nach Anspruch 14.

16. Luftfahrzeug mit mindestens einer Triebwerksanordnung nach Anspruch 15.

## Claims

1. Resistive skin shell for an aircraft air intake acoustic panel or inner wall (103), comprising metal bands (10; 110; 210), the metal bands having a frontal face (14), called outer face, intended to be in contact with an aerodynamic flow, and an opposite frontal face (12) called inner face, said metal bands (10, 110; 210) being linked to each other by solid bands (20, 120; 220), the solid bands (20, 120; 220) having an outer frontal face (26) flush with the outer faces (14) of the metal bands, the resistive skin shell consequently having a smooth outer face,
**characterized in that** said metal bands (10; 110; 210) are perforated and extend in a longitudinal direction (X) and are spaced apart from one another in a transverse direction (Y),
and **in that** the solid bands (20, 120; 220) are made of composites and extend in the longitudinal direction (X), which composite solid bands are made of a fibrereinforced polymer, the composite solid bands (20, 120; 220) having in addition a thickness greater than that of the perforated metal bands (10, 110; 210), the composite solid bands consequently having an inner face (22) that is raised with respect to the inner face (12) of the perforated metal bands.

2. Resistive skin shell according to Claim 1, **characterized in that** the perforated metal bands (10) have longitudinal edges that are chamfered (16) and/or irregular, configured to facilitate and/or reinforce the attachment, on the metal bands (10), of the fibrereinforced polymer constituting the composite solid bands (20) .

3. Resistive skin shell according to either of Claims 1 and 2, **characterized in that** the perforated metal bands (10, 210) have perforations or micro-perforations (30; 230) that have a greater dimension in the longitudinal direction (X) and/or a smaller dimension in the transverse direction (Y).

4. Resistive skin shell according to one of Claims 1 to 3, **characterized in that** the metal bands (10, 110; 210) have oblong perforations or micro-perforations (30, 130; 230).

5. Resistive skin shell according to Claim 4, **characterized in that** the oblong micro-perforations or perforations have a width of between 0.15 mm and 2 mm, and a length of between 0.6 mm and 20 mm.

6. Resistive skin shell according to either of Claims 4 and 5, **characterized in that** the ratio between the length and the width of the perforations or micro-perforations is between 2 and 10.

7. Resistive skin shell according to one of Claims 1 to 3, **characterized in that** the metal bands (10, 110; 210) have circular micro-perforations with a diameter of between 0.25 mm and 0.35 mm.

8. Resistive skin shell according to one of Claims 1 to 7, **characterized in that** the perforated metal bands (10, 110; 210) have a thickness of between 0.1 mm and 0.4 mm, and **in that** the composite solid bands (20; 120; 220) have a thickness of between 0.3 mm and 0.6 mm.

9. Resistive skin shell according to one of Claims 1 to 8, **characterized in that** the perforated metal bands (10, 110; 210) are made of a metal material chosen from stainless steels, titanium and alloys of the preceding materials.

10. Resistive skin shell according to one of Claims 1 to 9, **characterized in that** the composite solid bands (20, 120; 220) are made of a composite material based on fibres chosen from carbon fibres, glass fibres, Kevlar fibres, aramid fibres, embedded in a polymer chosen from thermoplastic resins including the resins of the family of polyetheretherketones (PEEK) and the resins of the family of polyetherimides (PEI).

11. Resistive skin shell according to one of Claims 1 to 10, **characterized in that** the composite solid bands (20, 120, 220) have a thickness that is variable in the longitudinal direction (X), with a thickness that is locally greater in at least one transverse plane.

12. Aircraft air intake inner wall (103) comprising a resistive skin configured to allow the passage of acoustic waves, a cellular core configured to damp said acoustic waves and a structural rear skin, **characterized in that** the resistive skin of the inner wall is composed of resistive skin shells according to one of Claims 1 to 11, the longitudinal direction of the resistive skin shells being parallel to a central axis of the air intake.

13. Aircraft air intake inner wall according to Claim 12, **characterized in that** it also comprises, between the resistive skin and the cellular core, a winding composed either of a plurality of composite solid bands extending in transverse planes all around a central duct formed by the resistive skin, and spaced apart from one another in the longitudinal direction, or of a single helical composite solid band wound around said duct.

14. Aircraft nacelle (200) comprising an air intake having an inner wall according to either of Claims 12 and 13.

15. Aircraft propulsion assembly comprising a nacelle (200) according to Claim 14.

16. Aircraft comprising at least one propulsion assembly according to Claim 15.
